# EUROPEAN PATENT APPLICATION

(11) **EP 4 576 043 A1**
(43) Date of publication of application: **25.06.2025**
(21) Application number: 22955677.4
(22) Date of filing: 16.08.2022
(51) Int. Cl.: G08G 1/16

(54) **DRIVING ASSISTANCE DEVICE, LIGHT VEHICLE TERMINAL, AND DRIVING ASSISTANCE METHOD**

(71) Applicant: MITSUBISHI ELECTRIC CORPORATION, Chiyoda-ku Tokyo 100-8310 (JP)
(72) Inventor: MIYAHARA Tadashi, Tokyo 100-8310 (JP); SHIMOTANI Mitsuo, Tokyo 100-8310 (JP); ITO Shigehiro, Tokyo 100-8310 (JP)
(74) Representative: Hoffmann Eitle
(86) International application number: PCT/JP2022/030965
(87) International publication number: WO 2024/038503

(57) **Abstract**

The present disclosure has an object to reduce risks of collision of a light vehicle with another mobile body in a caution area. A driving assistance apparatus (101) includes a storage (13) configured to store a first light vehicle caution map (14) defining a caution area in which there is a risk of collision between a light vehicle and a nearby mobile body, a communication unit (11) configured to receive travel information including at least one of light vehicle information including position information of the light vehicle received from a light vehicle terminal (201) and nearby mobile body information including position information of the nearby mobile body received from a nearby mobile body terminal (301), and a notification determination unit (12) configured to determine whether or not at least one of the light vehicle and the nearby mobile body is to enter the caution area, based on the travel information and the first light vehicle caution map (14). When at least one of the light vehicle and the nearby mobile body is to enter the caution area, the communication unit (11) transmits notification information that there is the risk of collision between the light vehicle and the nearby mobile body to an information terminal of at least another one.

## Description

### TECHNICAL FIELD

The present disclosure relates to driving assistance for a light vehicle.

### BACKGROUND ART

Patent Document 1 discloses an on-board apparatus that receives information of a nearby mobile body from a nearby mobile body present in a caution area when a vehicle reaches inside the caution area predetermined for each intersection, and performs driving assistance for the vehicle by using the received information.

### PRIOR ART DOCUMENTS

### PATENT DOCUMENT

Patent Document 1: Japanese Patent Application Laid-Open No. 2017-111565

### SUMMARY

### PROBLEM TO BE SOLVED BY THE INVENTION

The on-board apparatus of Patent Document 1 is intended for driving assistance for an automobile, and is not intended for driving assistance for a light vehicle such as a bicycle, an e-scooter, or a wheelchair. In general, the light vehicle moves at a speed lower than an automobile, and does not necessarily travel on the same road as the automobile.

The present disclosure is made to solve the problem described above, and has an object to reduce risks of collision of a light vehicle with another mobile body in a caution area, such as an intersection with poor views.

### MEANS TO SOLVE THE PROBLEM

A driving assistance apparatus of the present disclosure includes a storage configured to store a first light vehicle caution map defining a caution area in which there is a risk of collision between a light vehicle and a nearby mobile body moving in a nearby area of the light vehicle, a communication unit configured to receive travel information including at least one of light vehicle information including position information of the light vehicle received from a light vehicle terminal being an information terminal mounted on the light vehicle and nearby mobile body information including position information of the nearby mobile body received from a nearby mobile body terminal being an information terminal mounted on the nearby mobile body, and a notification determination unit configured to determine whether or not at least one of the light vehicle and the nearby mobile body is to enter the caution area, based on the travel information and the first light vehicle caution map. When at least one of the light vehicle and the nearby mobile body is to enter the caution area, the communication unit transmits notification information that there is the risk of collision between the light vehicle and the nearby mobile body to the information terminal of at least another one.

### EFFECTS OF THE INVENTION

According to the driving assistance apparatus of the present disclosure, when at least one of the light vehicle and the nearby mobile body is to enter the caution area, the notification information is transmitted to the information terminal of at least another one. Consequently, when notification of the risk of collision is performed in the information terminal of the light vehicle or the nearby mobile body, the risk of collision between the light vehicle and the nearby mobile body is reduced. These and other objects, features, aspects and advantages of the present disclosure will become more apparent from the following detailed description of the present disclosure when taken in conjunction with the accompanying drawings.

### BRIEF DESCRIPTION OF DRAWINGS

FIG. 1 is a block diagram illustrating a configuration of a driving assistance system according to Embodiment 1.
FIG. 2 is a flowchart illustrating a notification processing example of a driving assistance apparatus according to Embodiment 1.
FIG. 3 is a diagram illustrating a situation in which a light vehicle A and a nearby mobile body B are to enter an intersection P1.
FIG. 4 is a diagram illustrating a notification example of a nearby mobile body terminal in the situation illustrated in FIG. 3.
FIG. 5 is a flowchart illustrating a notification processing example of the driving assistance apparatus according to Embodiment 1.
FIG. 6 is a flowchart illustrating a notification processing example of the driving assistance apparatus according to Embodiment 1.
FIG. 7 is a block diagram illustrating a configuration of a driving assistance system according to a first modification of Embodiment 1.
FIG. 8 is a block diagram illustrating a configuration of a driving assistance system according to Embodiment 2.
FIG. 9 is a flowchart illustrating notification processing of a driving assistance apparatus according to Embodiment 2.
FIG. 10 is a diagram illustrating a difference of notification levels between a priority road and a non-priority road.
FIG. 11 is a diagram illustrating a difference of notification levels due to grades of roads.
FIG. 12 is a diagram illustrating a difference of notification levels depending on a relationship between an entry direction of a light vehicle and an entry direction of a nearby mobile body.
FIG. 13 is a diagram illustrating a notification example with a low notification level.
FIG. 14 is a diagram illustrating a notification example with an intermediate notification level.
FIG. 15 is a diagram illustrating a notification example with a high notification level.
FIG. 16 is a diagram illustrating a configuration of a driving assistance system according to a first modification of Embodiment 2.
FIG. 17 is a diagram illustrating a configuration of a driving assistance system according to Embodiment 3.
FIG. 18 is a flowchart illustrating notification processing of a driving assistance apparatus according to Embodiment 3.
FIG. 19 is a diagram illustrating a configuration of a driving assistance system according to Embodiment 4.
FIG. 20 is a flowchart illustrating map update processing of a map update unit of a driving assistance apparatus according to Embodiment 4.
FIG. 21 is a diagram illustrating a situation in which the light vehicle A almost collided with a nearby mobile body D.
FIG. 22 is a diagram illustrating monitoring operation of a light vehicle terminal 201 mounted on the light vehicle A.
FIG. 23 is a diagram illustrating a configuration of a driving assistance system according to a first modification of Embodiment 4.
FIG. 24 is a diagram illustrating a hardware configuration of the driving assistance system.

### DESCRIPTION OF EMBODIMENTS

### <A. Embodiment 1>

### <A-1. Configuration>

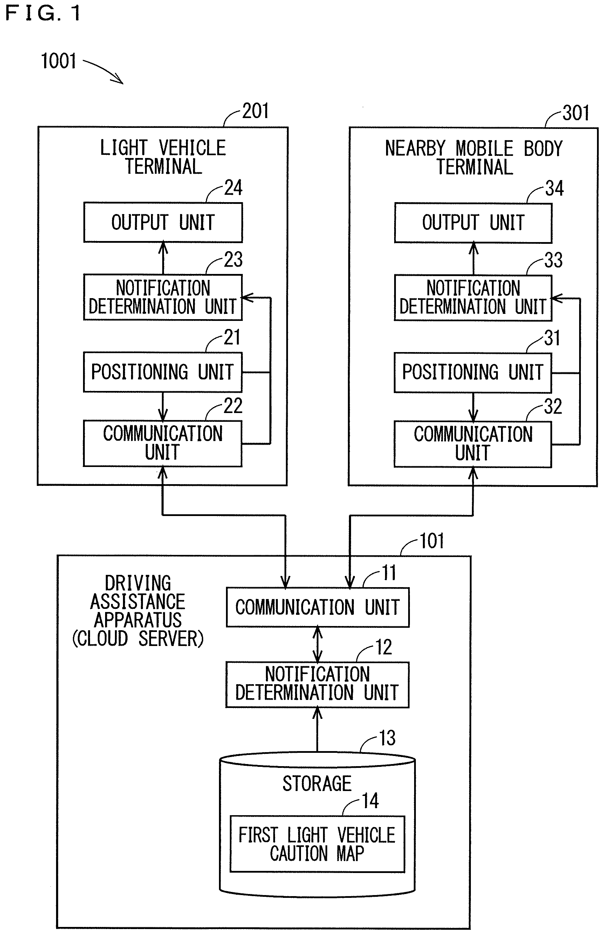

FIG. 1 is a block diagram illustrating a configuration of a driving assistance system 1001 according to Embodiment 1. The driving assistance system 1001 includes a driving assistance apparatus 101, a light vehicle terminal 201, and a nearby mobile body terminal 301.

The driving assistance apparatus 101 is an apparatus that gives notification of a risk of collision of a light vehicle to be assisted with a nearby mobile body to thereby assist safe driving of the light vehicle. The driving assistance apparatus 101 is configured with a cloud server, for example. Examples of the light vehicle include a bicycle, an e-scooter, a wheelchair, and the like.

The light vehicle terminal 201 is a terminal mounted on a light vehicle. Here, "mounted on a light vehicle" includes a state of moving along with the light vehicle by being carried by an occupant of the light vehicle, as well as a state of being attached to the light vehicle.

The light vehicle terminal 201 includes a positioning unit 21, a communication unit 22, a notification determination unit 23, and an output unit 24. The positioning unit 21 is also referred to as a light vehicle positioning unit, the communication unit 22 as a light vehicle communication unit, and the notification determination unit 23 as a light vehicle determination unit.

The positioning unit 21 measures a position of the light vehicle terminal 201. For example, the positioning unit 21 receives GPS signals from Global Positioning System (GPS) satellites, and measures the position of the light vehicle terminal 201, based on the GPS signals. Because the light vehicle terminal 201 is mounted on a light vehicle, the position of the light vehicle terminal 201 is synonymous with the position of the light vehicle.

The communication unit 22 performs wireless communication with the driving assistance apparatus 101. The communication unit 22 wirelessly transmits light vehicle information, which is information of the light vehicle, to the driving assistance apparatus 101. The light vehicle information includes position information of the light vehicle measured by the positioning unit 21.

The notification determination unit 23 determines whether or not to output notification information acquired from the driving assistance apparatus 101 via the output unit 24, that is, notify the light vehicle. Note that, when the notification information is transmitted from the driving assistance apparatus 101 to the nearby mobile body terminal 301 only, and when the fact that the light vehicle is to enter a caution area is used as a notification condition, the notification determination unit 23 is not a configuration essential to the light vehicle terminal 201.

The output unit 24 outputs the notification information received from the driving assistance apparatus 101. The output unit 24 includes at least one of a display that outputs the notification information via display, a light-emitting display apparatus, and a speaker that outputs the notification information via voice, for example. Note that, when the light vehicle terminal 201 does not receive the notification information from the driving assistance apparatus 101, the output unit 24 is not a configuration essential to the light vehicle terminal 201. The light-emitting display apparatus is a dedicated warning apparatus attached to a handlebar of a bicycle or a helmet, for example.

The nearby mobile body terminal 301 is a terminal mounted on a nearby mobile body. The nearby mobile body is a mobile body travelling in a nearby area of the light vehicle, and includes a pedestrian, a light vehicle, and an automobile. Here, "mounted on a nearby mobile body" includes a state of moving along with the light vehicle by being carried by an occupant of the nearby mobile body, as well as a state of being attached to the nearby mobile body.

The nearby mobile body terminal 301 includes a positioning unit 31, a communication unit 32, a notification determination unit 33, and an output unit 34. The positioning unit 31 measures a position of the nearby mobile body terminal 301. For example, the positioning unit 31 receives GPS signals from Global Positioning System (GPS) satellites, and measures the position of the nearby mobile body terminal 301, based on the GPS signals. Because the nearby mobile body terminal 301 is mounted on a nearby mobile body, the position of the nearby mobile body terminal 301 is synonymous with the position of the nearby mobile body.

The communication unit 32 performs wireless communication with the driving assistance apparatus 101. The communication unit 32 wirelessly transmits nearby mobile body information, which is information of the nearby mobile body, to the driving assistance apparatus 101. The nearby mobile body information includes position information of the nearby mobile body measured by the positioning unit 31.

The notification determination unit 33 determines whether or not to output notification information received by the communication unit 32 from the driving assistance apparatus 101 via the output unit 34, and controls output in the output unit 34. Note that, when the fact that the nearby mobile body is to enter a caution area is used as a notification condition, the notification determination unit 33 is not a configuration essential to the nearby mobile body terminal 301.

The output unit 34 outputs the notification information received by the communication unit 32 from the driving assistance apparatus 101. The output unit 34 is at least one of a display, a light-emitting display apparatus, and a speaker, as in the case of the output unit 24. In other words, the output unit 34 outputs the notification information to the nearby mobile body, using at least one of voice and display.

The driving assistance apparatus 101 includes a communication unit 11, a notification determination unit 12, and a storage 13. The communication unit 11 receives the light vehicle information from the communication unit 22 of the light vehicle terminal 201, and receives the nearby mobile body information from the communication unit 32 of the nearby mobile body terminal 301. Note that the communication unit 11 may receive at least one of the light vehicle information and the nearby mobile body information. In other words, the communication unit 11 receives travel information, which includes at least one of the light vehicle information and the nearby mobile body information.

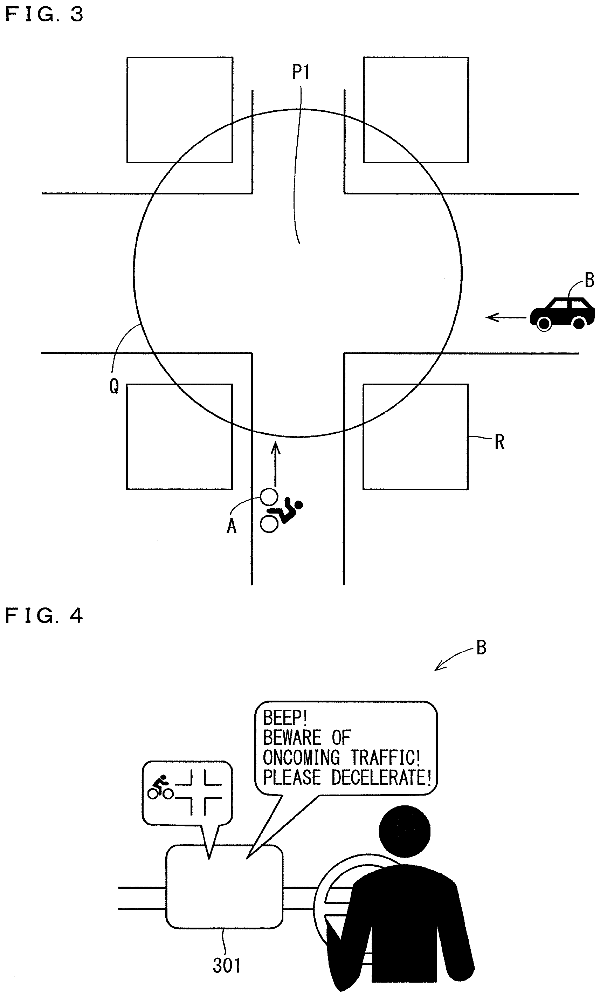

The storage 13 stores a first light vehicle caution map 14. The first light vehicle caution map 14 is map information defining a caution area. The caution area is a location where the light vehicle has a risk of colliding with the nearby mobile body and thus needs to travel with caution. For example, in FIG. 3, an intersection P1 with views obstructed by an object R and the like and a nearby area thereof are indicated as a caution area Q1.

The notification determination unit 12 determines whether or not the position of the light vehicle satisfies the notification condition, based on the position information of the light vehicle included in the light vehicle information received from the light vehicle terminal 201 and the first light vehicle caution map 14 stored in the storage 13. For example, the notification condition is that the light vehicle is to enter the caution area. The notification determination unit 12 determines that the light vehicle is to enter the caution area, when the light vehicle has come close to a predetermined distance or less, such as 200 m or less, with respect to the caution area. Alternatively, the notification determination unit 12 determines that the light vehicle is to enter the caution area, when the notification determination unit 12 predicts a period of time before reaching the caution area based on the current speed of the light vehicle and the predicted period of time is equal to or less than a predetermined period of time.

When the notification determination unit 12 determines that the slight vehicle is to enter the caution area, the communication unit 11 transmits the notification information to the nearby mobile body terminal 301. Here, the notification information to be transmitted to the nearby mobile body terminal 301 includes information that the light vehicle is to enter the caution area and the position information of the light vehicle.

### <A-2. Operation>

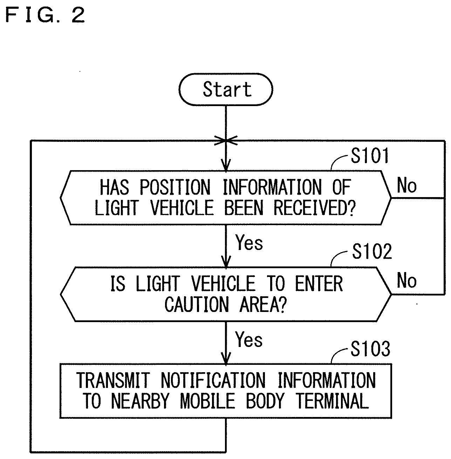

FIG. 2 is a flowchart illustrating a notification processing example of the driving assistance apparatus 101. Notification processing of the driving assistance apparatus 101 will be described below in accordance with the flow of FIG. 2. The flow of FIG. 2 is started upon start of travelling of the light vehicle, for example.

First, in Step S101, the communication unit 11 determines whether or not the communication unit 11 has received the position information of the light vehicle from the light vehicle terminal 201. The communication unit 11 repeats the processing of Step S101 until receiving the position information of the light vehicle. Note that the communication unit 22 of the light vehicle terminal 201 transmits the position information of the light vehicle measured by the positioning unit 21 to the driving assistance apparatus 101 with a certain period, for example.

When the communication unit 11 receives the position information of the light vehicle in Step S101, the communication unit 11 outputs the position information of the light vehicle to the notification determination unit 12. In Step S102, the notification determination unit 12 that has acquired the position information of the light vehicle refers to the first light vehicle caution map 14 stored in the storage 13, and determines whether or not the light vehicle is to enter the caution area.

In Step S102, when the light vehicle is not to enter the caution area, the notification processing of the driving assistance apparatus 101 returns to Step S101.

In Step S102, when the light vehicle is to enter the caution area, in Step S103, the communication unit 11 transmits the notification information to the communication unit 32 of the nearby mobile body terminal 301.

The notification information includes information that the light vehicle is to enter the caution area and the position information of the light vehicle. The nearby mobile body terminal 301 that has received the notification information in the communication unit 32 determines whether or not notification is necessary in the notification determination unit 33. The notification determination unit 33 compares the position information of the nearby mobile body acquired from the positioning unit 31 and the position information of the light vehicle included in the notification information received from the driving assistance apparatus 101, and when both are approaching each other, for example, when a distance between the both is less than a predetermined threshold, the notification determination unit 33 determines that notification is necessary. In this case, the output unit 34 performs notification that there is a risk of collision of the nearby mobile body with the light vehicle in the caution area. Here, a positional relationship between the nearby mobile body, the light vehicle, and the caution area may be displayed on a map. Consequently, a driver of the nearby mobile body can recognize a risk of collision with the light vehicle, and can carry out safe driving through deceleration or the like.

FIG. 3 illustrates a situation in which a light vehicle A and a nearby mobile body B are to enter the caution area Q1 including the intersection P1 from two different directions. The object R is present at a corner of the intersection P1, and thus the light vehicle A and the nearby mobile body B cannot not easily recognize each other. In such a situation, the driving assistance apparatus 101 transmits information that the light vehicle A is to enter the caution area Q1 and position information of the light vehicle A to the nearby mobile body terminal 301 mounted on the nearby mobile body B.

The nearby mobile body terminal 301 determines that the nearby mobile body B is to enter the caution area Q1, and notifies an occupant that there is a risk of collision with the light vehicle A in the caution area Q1. FIG. 4 illustrates a notification example of the nearby mobile body terminal 301 in the situation illustrated in FIG. 3. The nearby mobile body terminal 301 displays the positions of the caution area Q1 and the light vehicle A on a map, and outputs a notification voice, such as "Beware of oncoming traffic! Please decelerate!"

Illustrated above is the notification processing example of the driving assistance apparatus 101 in which the notification information is transmitted to the nearby mobile body terminal 301, with the fact that the light vehicle is to enter the caution area being used as the notification condition.

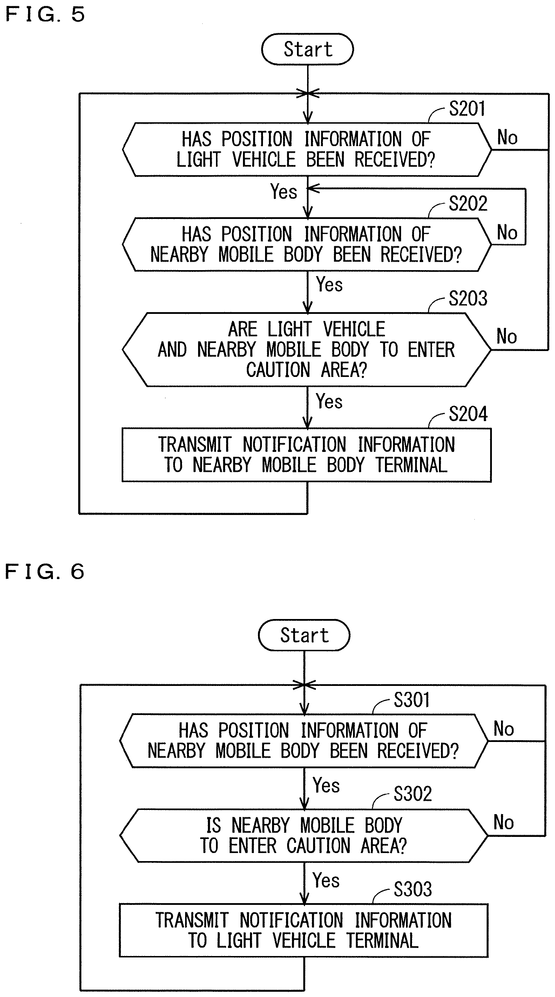

Although the fact that the light vehicle is to enter the caution area is used as the notification condition in the notification processing example of FIG. 2, the fact that both of the light vehicle and the nearby mobile body are to enter the caution area may be used as an example of the notification condition. FIG. 5 is a flowchart illustrating such a notification processing example.

First, in Step S201, the communication unit 11 determines whether or not the communication unit 11 has received the position information of the light vehicle from the light vehicle terminal 201. This step is similar to Step S101 of FIG. 2. The communication unit 11 repeats the processing of Step S201 until receiving the position information of the light vehicle.

When the communication unit 11 receives the position information of the nearby mobile body in Step S202, the notification determination unit 12 acquires the position information of the light vehicle and the nearby mobile body from the communication unit 11. Then, in Step S203, the notification determination unit 12 refers to the first light vehicle caution map 14 stored in the storage 13, and determines whether or not both of the light vehicle and the nearby mobile body are to enter the caution area.

In Step S203, when only one of the light vehicle and the nearby mobile body is to enter the caution area, or when neither the light vehicle nor the nearby mobile body is to enter the caution area, the notification processing of the driving assistance apparatus 101 returns to Step S201.

On the other hand, in Step S203, when both of the light vehicle and the nearby mobile body are to enter the caution area, the notification determination unit 12 determines that notification to the nearby mobile body is to be performed. Then, in Step S204, the communication unit 11 transmits the notification information to the communication unit 32 of the nearby mobile body terminal 301.

The nearby mobile body terminal 301 that has received the notification information in Step S204 performs notification that there is a risk of collision of the nearby mobile body with the light vehicle in the caution area via the output unit 34. In the processing example of FIG. 5, the nearby mobile body terminal 301 invariably performs notification upon receiving the notification information from the driving assistance apparatus 101, and does not determine whether or not notification is to be performed. Thus, in the processing example of FIG. 5, the notification determination unit 33 is not essential to the nearby mobile body terminal 301.

Note that, in the processing example of FIG. 5, the notification information is transmitted to the nearby mobile body terminal 301, with the fact that both of the light vehicle and the nearby mobile body are to enter the caution area being used as the notification condition. However, the notification information may be transmitted to the light vehicle terminal 201 in a similar situation. In the light vehicle terminal 201, notification that there is a risk of collision of the light vehicle with the nearby mobile body in the caution area may be performed.

Alternatively, the driving assistance apparatus 101 may transmit the notification information to both of the nearby mobile body terminal 301 and the light vehicle terminal 201, and notification may be performed in both of the light vehicle terminal 201 and the nearby mobile body terminal 301.

The driving assistance apparatus 101 may transmit the notification information to the light vehicle terminal 201, with the fact that the nearby mobile body is to enter the caution area being the notification condition. FIG. 6 is a flowchart illustrating such a notification processing example.

First, in Step S301, the communication unit 11 determines whether or not the communication unit 11 has received the position information of the nearby mobile body from the nearby mobile body terminal 301. The communication unit 11 repeats the processing of Step S301 until receiving the position information of the nearby mobile body.

When the communication unit 11 receives the position information of the nearby mobile body in Step S301, the communication unit 11 outputs the position information of the nearby mobile body to the notification determination unit 12. In Step S302, the notification determination unit 12 that has acquired the position information of the nearby mobile body refers to the first light vehicle caution map 14 stored in the storage 13, and determines whether or not the nearby mobile body is to enter the caution area.

In Step S302, when the nearby mobile body is not to enter the caution area, the notification processing of the driving assistance apparatus 101 returns to Step S301.

In Step S302, when the nearby mobile body is to enter the caution area, in Step S303, the communication unit 11 transmits the notification information to the communication unit 22 of the light vehicle terminal 201.

The notification information includes information that the nearby mobile body is to enter the caution area and the position information of the nearby mobile body. The light vehicle terminal 201 that has received the notification information in the communication unit 32 determines whether or not notification is necessary in the notification determination unit 23. The notification determination unit 23 compares the position information of the light vehicle acquired from the positioning unit 21 and the position information of the nearby mobile body included in the notification information received from the driving assistance apparatus 101, and when both are approaching each other, for example, when a distance between the both is less than a predetermined threshold, the notification determination unit 23 determines that notification is necessary. In this case, the output unit 24 performs notification that there is a risk of collision of the light vehicle with the nearby mobile body in the caution area. Here, a positional relationship between the nearby mobile body, the light vehicle, and the caution area may be displayed on a map. Consequently, a driver of the light vehicle can recognize a risk of collision with the nearby mobile body, and can carry out safe driving through deceleration or the like.

### <A-3. Effects>

The driving assistance apparatus 101 according to Embodiment 1 includes the storage 13 configured to store the first light vehicle caution map defining the caution area in which there is a risk of collision between the light vehicle and the nearby mobile body moving in a nearby area of the light vehicle, the communication unit 11 configured to receive the travel information including at least one of the light vehicle information including the position information of the light vehicle received from the light vehicle terminal 201 being an information terminal mounted on the light vehicle and the nearby mobile body information including the position information of the nearby mobile body received from the nearby mobile body terminal 301 being an information terminal mounted on the nearby mobile body, and the notification determination unit 12 configured to determine whether or not at least one of the light vehicle and the nearby mobile body is to enter the caution area, based on the travel information and the light vehicle caution map. When at least one of the light vehicle and the nearby mobile body is to enter the caution area, the communication unit 11 transmits the notification information that there is the risk of collision between the light vehicle and the nearby mobile body to the information terminal of at least another one.

According to the configuration described above, the risk of collision between the light vehicle and the nearby mobile body can be notified to at least one of the light vehicle and the nearby mobile body, and thus safe driving of the light vehicle can be assisted.

When the determination as to whether or not the light vehicle is to enter the caution area is performed by the driving assistance apparatus 101, the first light vehicle caution map 14 need not be stored in the light vehicle terminal 201. Thus, memory of the light vehicle terminal 201 can be saved.

### <A-4. First Modification>

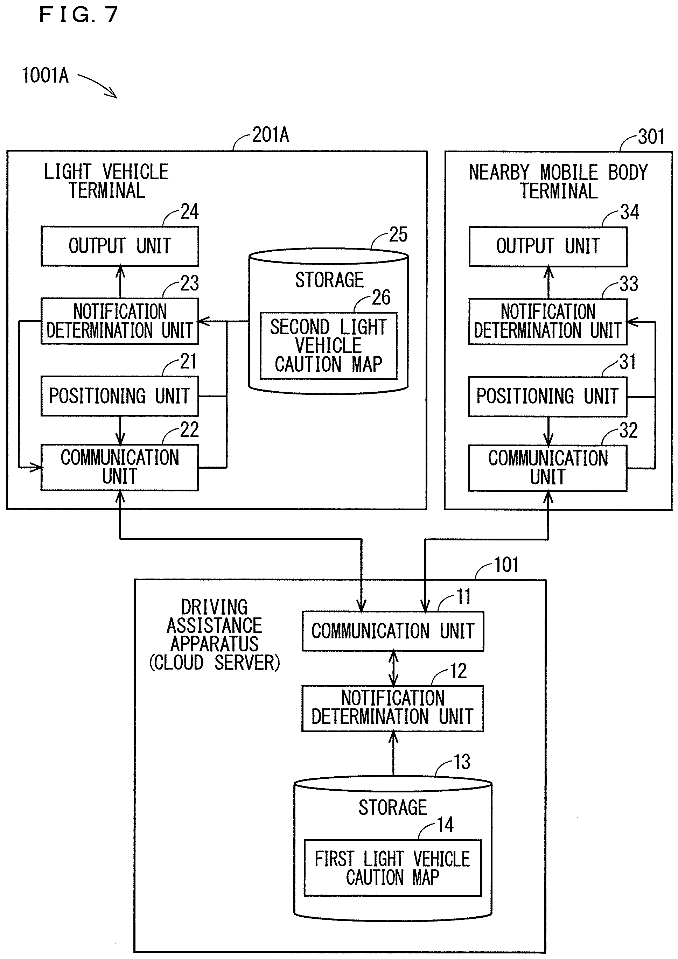

FIG. 7 illustrates a configuration of a driving assistance system 1001A according to a first modification of Embodiment 1. In the driving assistance system 1001A, the light vehicle terminal 201 of the driving assistance system 1001 according to Embodiment 1 is replaced by a light vehicle terminal 201A. The light vehicle terminal 201A includes a storage 25, in addition to the configuration of light vehicle terminal 201.

The storage 25 stores a second light vehicle caution map 26, which is identical to the first light vehicle caution map 14 stored in the storage 13 of the driving assistance apparatus 101. The storage 25 is also referred to as a light vehicle storage.

The notification determination unit 23 acquires the position of the light vehicle from the positioning unit 21, refers to the second light vehicle caution map 26, and determines whether or not the light vehicle is to enter the caution area.

Only when the light vehicle is to enter the caution area, the communication unit 22 transmits the position information of the light vehicle to the driving assistance apparatus 101. Here, intervals of transmission of the position information of the light vehicle from the light vehicle terminal 201 to the driving assistance apparatus 101 may become shorter as the light vehicle further approaches the caution area.

Alternatively, the light vehicle terminal 201 may transmit information indicating entry to or exit from the caution area of the light vehicle to the driving assistance apparatus 101, in place of the position information of the light vehicle. The light vehicle terminal 201 transmits information indicating that the light vehicle has entered the caution area to the driving assistance apparatus 101, at the timing of the light vehicle entering the caution area. The light vehicle terminal 201 transmits information indicating that the light vehicle has exited from the caution area to the driving assistance apparatus 101, at the timing of the light vehicle exiting from the caution area.

When the driving assistance apparatus 101 acquires the position information of the light vehicle or the information indicating entry of the light vehicle to the caution area from the light vehicle terminal 201, the driving assistance apparatus 101 predicts the position of the light vehicle on the assumption that the light vehicle continues to travel in the caution area despite the absence of subsequent communication from the light vehicle terminal 201. Then, the driving assistance apparatus 101 maps the predicted position of the light vehicle on the first light vehicle caution map 14, and as necessary, performs notification to the nearby mobile body that there is a risk of collision with the light vehicle in the caution area.

It is considered that, when the light vehicle turns right or left at a junction such as an intersection or decelerates on a road without a junction, the actual position of the light vehicle deviates from the position predicted in the driving assistance apparatus 101. In such a case, the light vehicle terminal 201 may re-transmit the position information of the light vehicle to the driving assistance apparatus 101.

According to the first modification, only when the light vehicle is to enter the caution area, the light vehicle terminal 201 transmits the position information of the light vehicle to the driving assistance apparatus 101. Thus, communication resources are saved as compared to the configuration of FIG. 1 in which the position information of the light vehicle is transmitted from the light vehicle terminal 201 to the driving assistance apparatus 101 on a regular basis, such as with a certain period.

### <A-5. Second Modification>

When there are a plurality of nearby mobile bodies around the light vehicle at the time point when the light vehicle is to enter the caution area, the notification determination unit 12 may provide the plurality of nearby mobile bodies with priorities, and perform notification about a risk of collision between nearby mobile body(ies) having high priority(ies) and the light vehicle to at least one of the nearby mobile body(ies) and the light vehicle.

For example, a road where there is a line of vehicles with a plurality of nearby mobile bodies travelling in a row is the caution area, and the light vehicle is to pass by on the left side of the line of vehicles. The notification determination unit 12 calculates a motion vector of the light vehicle based on a change of the position information of the light vehicle, calculates a motion vector of each nearby mobile body based on a change of the position information of each nearby mobile body, and selects the nearby mobile body(ies) having the motion vector(s) crossing the motion vector of the light vehicle. Then, the communication unit 11 transmits the notification information to at least one of the nearby mobile body(ies) selected by the notification determination unit 12 and the light vehicle.

### <A-6. Third Modification>

In FIG. 1, description is given on the assumption that the driving assistance apparatus 101 is a cloud server. However, at least a part of the configuration of the driving assistance apparatus 101 may be distributed in the light vehicle terminal 201 and the nearby mobile body terminal 301, and the functions of the driving assistance system 1001 may be implemented without using the cloud server, or the functions of the driving assistance system 1001 may be implemented using edge computing.

According to such a configuration, at least a part of communication is directly performed between the light vehicle terminal 201 and the nearby mobile body terminal 301 without using the driving assistance apparatus 101 being a cloud server, and thus notification processing can be performed promptly.

### <B. Embodiment 2>

### <B-1. Configuration>

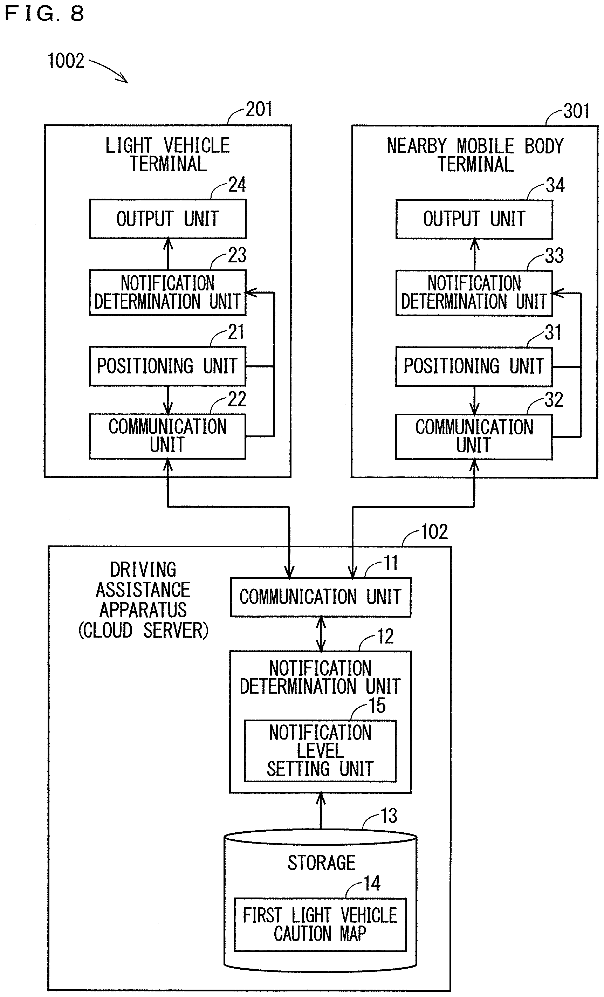

FIG. 8 illustrates a configuration of a driving assistance system 1002 according to Embodiment 2. In the driving assistance system 1002, the driving assistance apparatus 101 of the driving assistance system 1001 according to Embodiment 1 is replaced by a driving assistance apparatus 102. The driving assistance apparatus 102 is different from the driving assistance apparatus 101 in that the notification determination unit 12 includes a notification level setting unit 15.

The notification level setting unit 15 sets a notification level for the risk of collision between the light vehicle and the nearby mobile body.

### <B-2. Example of Determining Notification Level>

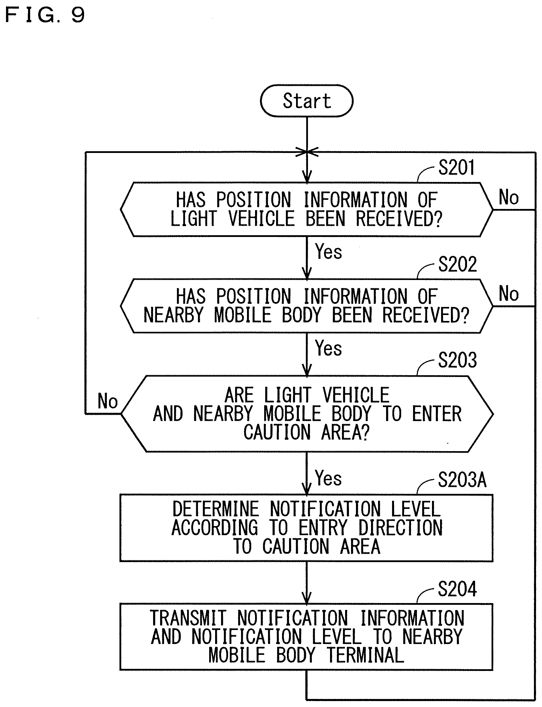

FIG. 9 is a flowchart illustrating notification processing of the driving assistance apparatus 102 according to Embodiment 2. In the flow of FIG. 9, Step S203A is added between Step S203 and Step S204 in the flow of FIG. 5 described in Embodiment 1.

In Step S203A, according to entry directions of the light vehicle and the nearby mobile body to the caution area, the notification level setting unit 15 determines the notification level for each of them.

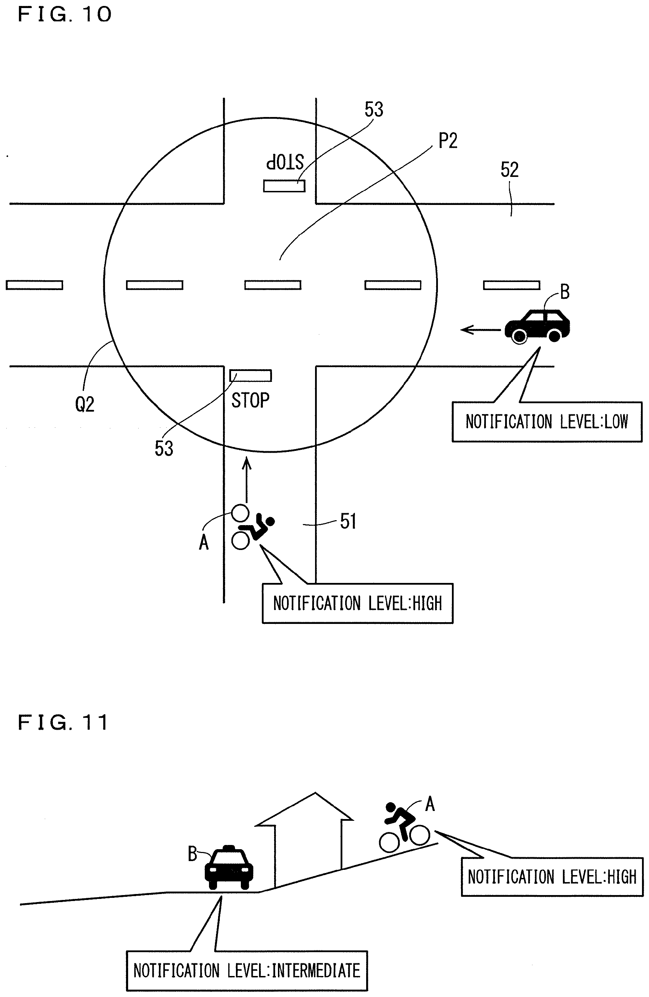

With reference to FIG. 10, an example of determining the notification level in the notification level setting unit 15 will be described. FIG. 10 illustrates a situation in which the light vehicle A is to enter a caution area Q2 including an intersection P2 from a road 51 and the nearby mobile body B is to enter the caution area Q2 from a road 52. Entering the intersection P2 from the road 51 requires coming to a stop at a road sign 53, whereas entering the intersection P2 from the road 52 does not require coming to a stop. Entering the intersection P2 from the road 51 requires greater caution than entering from the road 52. In this manner, required caution levels are different depending on the entry directions to the caution area Q2, and thus it is desirable that notification to each vehicle be performed at a corresponding level.

In view of this, in Embodiment 2, the first light vehicle caution map 14 is given, as attribute information, a degree of caution according to a priority of a road in an entry direction to the caution area. Then, the notification level setting unit 15 refers to the first light vehicle caution map 14, and sets the notification level according to the degree of caution of the entry direction to the caution area for each vehicle.

The notification level may be determined according to a grade of the road of the entry direction to the caution area. FIG. 11 illustrates the light vehicle A and the nearby mobile body B that are to enter the caution area. Here, the road on which the nearby mobile body B travels does not have a grade, whereas the road on which the light vehicle A travels has a downgrade. When the light vehicle A enters the caution area from a downward slope, an occupant of the light vehicle A tends to have a psychological desire to pass through the caution area without coming to a stop. This is why accidents at intersections upon meeting are liable to occur. In view of this, it is desirable that the light vehicle A to enter the caution area from a downward slope be assigned a higher notification level than the nearby mobile body B. Thus, the first light vehicle caution map 14 may be given, as attribute information, a degree of caution according to the grade of the road to enter the caution area.

The notification level setting unit 15 may set the notification level for the nearby mobile body according to a light vehicle occupant state.

The communication unit 11 of the driving assistance apparatus 102 receives the light vehicle occupant state from the communication unit 22 of the light vehicle terminal 201.

The light vehicle occupant state includes (1) driving skills of the occupant, (2) a psychological state or a physiological state of the occupant, (3) whether or not the occupant is looking away (gaze direction), and (4) a driving state as operation of the light vehicle.

Based on the light vehicle occupant state, when the driving skills of the occupant are low, i.e., when reduction in wakefulness, fatigue, looking away, or overspeeding is observed, the notification level setting unit 15 may raise the notification level, or may make the timing of notification come earlier.

On the other hand, based on the light vehicle occupant state, when the light vehicle decelerates, or when a braking operation is performed, the notification level setting unit 15 may lower the notification level. For example, when a user of a bicycle performs a decelerating operation in entering an intersection, the notification level setting unit 15 may determine that the user of the bicycle themselves is cautious about collision with oncoming traffic at the intersection, and thus lower the notification level.

For the caution area given "poor views" as the attribute information as road object information, the notification level setting unit 15 may keep the notification level at a higher level even in a situation in which the light vehicle or the nearby mobile body decelerates, and when the notification level setting unit 15 determines that the light vehicle or the nearby mobile body has come to a stop, the notification level setting unit 15 may lower the notification level.

In this manner, by lowering the notification level in accordance with the degree of deceleration of the light vehicle, excessive notifications can be reduced while the driver of the light vehicle is intentionally carrying out safe driving. Accordingly, notification is performed only when an operation for a collision avoidance action is truly necessary, and thus habituation to notifications and consciousness leading to inattentive driving of the occupant of the light vehicle or the nearby mobile body can be reduced.

Occupant information of the light vehicle is detected in the light vehicle terminal 201. For example, when an acceleration sensor provided in the light vehicle terminal 201 detects sideways sway or acceleration/deceleration, the occupant information can be detected. When an image sensor or a physiological sensor provided in the light vehicle terminal 201 performs driver monitoring, the occupant information of the light vehicle can be detected. A profile related to the driving skills of the occupant may be stored in the light vehicle terminal 201 in advance, and the profile may be transmitted from the light vehicle terminal 201 to the driving assistance apparatus 101.

For example, when an occupant of a bicycle being the light vehicle is a child or an elderly person and notification is performed from the nearby mobile body terminal 301 regarding a risk of collision with the light vehicle, the fact that the occupant of the light vehicle is a child or an elderly person may be notified together.

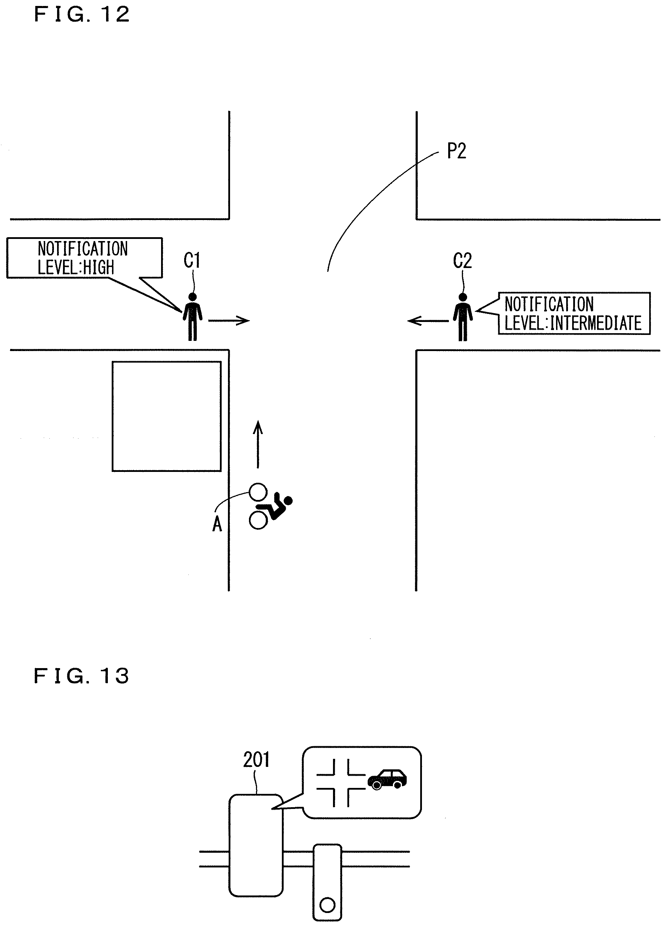

The light vehicle such as a bicycle that travels on the left side of the road has a distance closer to the left corner at an intersection than a standard-sized automobile. Thus, as illustrated in FIG. 12, when the light vehicle enters the intersection, the notification level setting unit 15 may set the notification level for a pedestrian C1 on the left side to be higher than the notification level for a pedestrian C2 on the right side.

When the light vehicle travelling on the left side of the road travels alongside an automobile or a truck having a large vehicle body being the nearby mobile body in entering an intersection being the caution area, there is a higher risk of a collision accident involving the light vehicle due to a sudden left turn made by the nearby mobile body. Thus, in such a case, the notification level setting unit 15 may raise the notification level for the light vehicle and the nearby mobile body.

When the light vehicle is to cross an intersection being the caution area and a passenger car in an oncoming traffic lane being the nearby mobile body is making a right turn, there is a higher risk of collision. Thus, in such a case, the notification level setting unit 15 may raise the notification level for the light vehicle and the nearby mobile body.

### <B-3. Notification Examples>

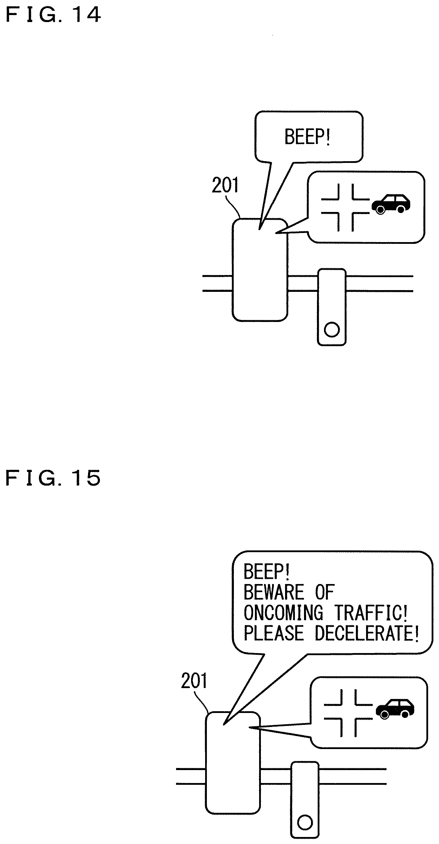

FIG. 13 to FIG. 15 illustrate notification examples in the light vehicle terminal 201. FIG. 13 illustrates a notification example with a low notification level, FIG. 14 illustrates a notification example with an intermediate notification level, and FIG. 15 illustrates a notification example with a high notification level. In these figures, the light vehicle terminal 201 is fixed to a handlebar of a bicycle being the light vehicle.

As illustrated in FIG. 13, when the notification level is low, a map showing the caution area and the position of the nearby mobile body is displayed on a display unit of the light vehicle terminal 201. As illustrated in FIG. 14, when the notification level is intermediate, a warning sound is output from the light vehicle terminal 201, in addition to the display of FIG. 12. As illustrated in FIG. 15, when the notification level is high, a warning voice, such as "Beware of collision ahead! Please decelerate!", is output from the light vehicle terminal 201, in addition to the display and the warning sound.

### <B-4. Effects>

In the driving assistance apparatus 102 according to Embodiment 2, the notification determination unit 12 determines the notification level for the light vehicle and the nearby mobile body. The notification information transmitted to the light vehicle terminal 201 includes the notification level for the light vehicle. The notification information transmitted to the nearby mobile body terminal 301 includes the notification level for the nearby mobile body. The light vehicle terminal 201 having received the notification information performs notification in a mode according to the notification level for the light vehicle, and the nearby mobile body terminal 301 having received the notification information performs notification in a mode according to the notification level for the nearby mobile body. Thus, according to the driving assistance apparatus 102, notification at an appropriate notification level can be performed.

### <B-5. First Modification>

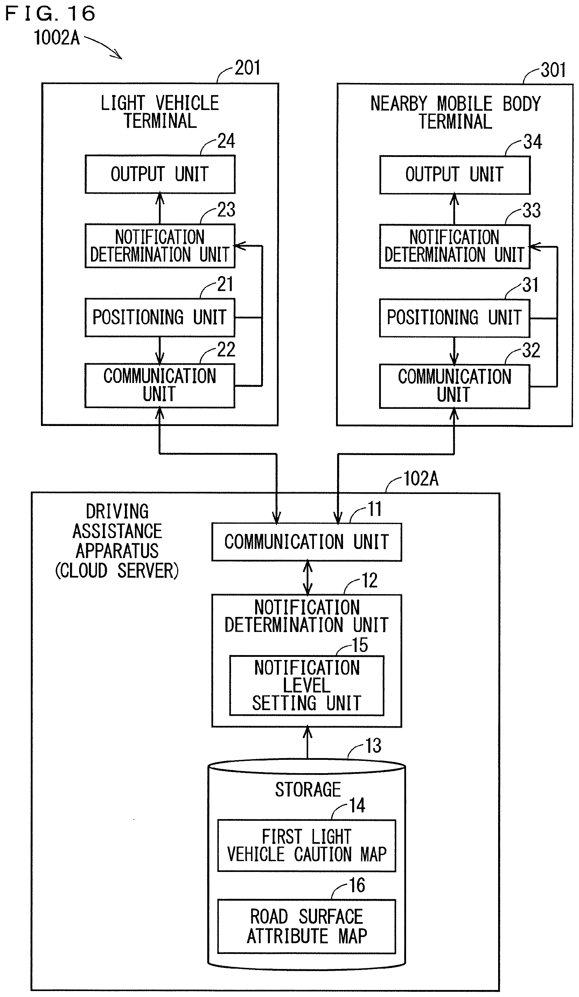

FIG. 16 illustrates a configuration of a driving assistance system 1002A according to a first modification of Embodiment 2. The driving assistance system 1002A includes a driving assistance apparatus 102A, in place of the driving assistance apparatus 101 of the driving assistance system 1001 according to Embodiment 1. The storage 13 of the driving assistance apparatus 102A stores a road surface attribute map 16, in addition to the first light vehicle caution map 14.

The road surface attribute map 16 includes attribute information of a road surface on which the light vehicle moves. Attributes of the road surface include the following, for example: (1) a grade attribute or an inclination attribute; (2) a road surface state attribute, e.g. a stone pavement, a rough road, or a paved road; (3) an attribute whether or not a road is a public road, e.g. a road having a width allowing passenger cars to travel, a road on which passenger cars cannot travel (a road on which only bicycles and pedestrians can pass), or a location, such as a parking lot, where automobiles, light vehicles, and pedestrians exist in a mixed manner; and (4) a poor-view attribute.

The notification level setting unit 15 changes the notification level according to the attribute of the road surface on which the light vehicle moves.

When the light vehicle moves between two road surfaces having different road surface attributes, the notification level setting unit 15 may change the notification level according to the change of the road surface attributes. In other words, when the light vehicle moves from a road surface having first attribute information to a road surface having second attribute information, the notification level setting unit 15 may set the notification level for the light vehicle or the nearby mobile body according to a combination of the first attribute information and the second attribute information.

For example, when the light vehicle moves from a road or a street on which only light vehicles or pedestrians can pass to a roadway on which only passenger cars can travel, an occupant of the light vehicle may neglect to exercise caution. When the light vehicle dashes out of such a narrow road, a driver of an automobile that may be the nearby mobile body may delay noticing the light vehicle. In such a case, the risk of collision is higher than usual, and thus the notification level setting unit 15 sets the notification level to be higher than usual.

The notification level setting unit 15 may set the notification level by taking account of the risk of collision upon meeting an automobile being the nearby mobile body when a bicycle being the light vehicle comes out on a road from a private property, a commercial facility, or the like, other than a road.

### <C. Embodiment 3>

### <C-1. Configuration>

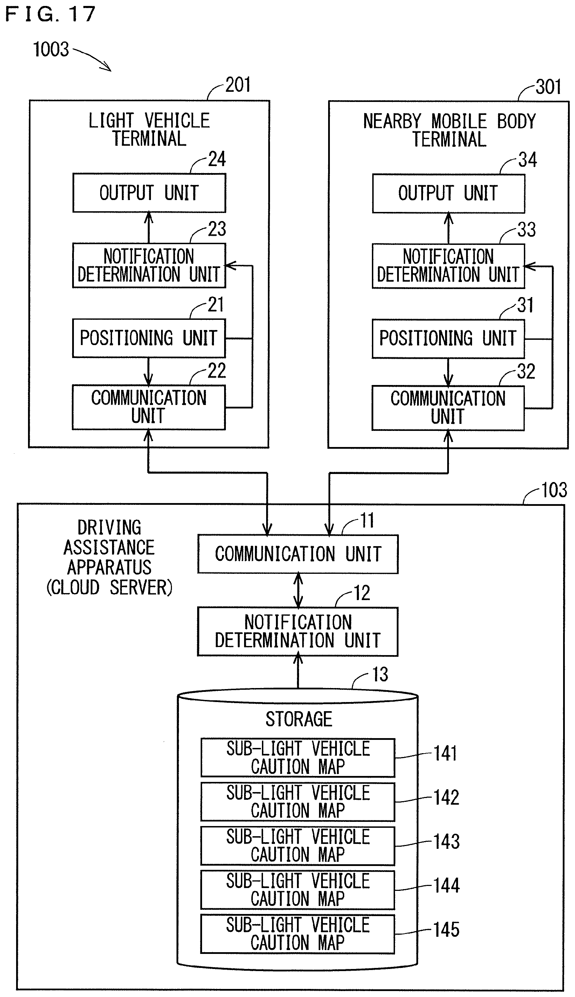

FIG. 17 illustrates a configuration of a driving assistance system 1003 according to Embodiment 3. The driving assistance system 1003 includes a driving assistance apparatus 103, in place of the driving assistance apparatus 101 of the driving assistance system 1001 according to Embodiment 1. The storage 13 of the driving assistance apparatus 103 stores a plurality of sub-light vehicle caution maps 141 to 145. The sub-light vehicle caution maps 141 to 145 each include information of a caution area according to an attribute of a different nearby mobile body.

The notification determination unit 12 refers to a sub-light vehicle caution map according to an attribute of the nearby mobile body, and determines whether or not notification is necessary, according to the attribute of the nearby mobile body having a risk of collision with a light vehicle.

For example, the sub-light vehicle caution map 141 includes a caution area having a risk of collision between a light vehicle and a pedestrian. The sub-light vehicle caution map 142 includes a caution area having a risk of collision between a light vehicle and another light vehicle. The sub-light vehicle caution map 143 includes a caution area having a risk of collision between a light vehicle and a motorcycle. The sub-light vehicle caution map 144 includes a caution area having a risk of collision between a light vehicle and a passenger car. The sub-light vehicle caution map 145 includes a caution area having a risk of collision between a light vehicle and a truck.

The caution areas in the sub-light vehicle caution maps 141 to 145 are not necessarily the same. For example, a road on which passenger cars cannot pass does not correspond to the caution area in the sub-light vehicle caution maps 144 and 145, but may correspond to the caution area in the sub-light vehicle caution maps 141 and 142.

### <C-2. Operation>

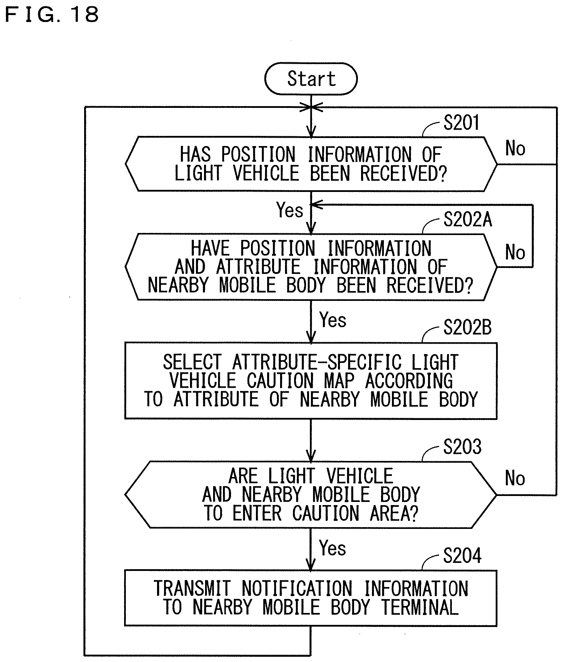

FIG. 18 is a flowchart illustrating notification processing of the driving assistance apparatus 103 according to Embodiment 3. In the flow of FIG. 18, Step S202A and Step S202B are provided in place of Step S202 in the flow of FIG. 5.

In Step S201, when the communication unit 11 receives the position information of the light vehicle from the light vehicle terminal 201, in Step S202A, the communication unit 11 determines whether or not the communication unit 11 has received the position information and the attribute information of the nearby mobile body from the nearby mobile body terminal 301. The communication unit 11 repeats the processing of Step S202A until receiving the position information and the attribute information of the nearby mobile body from the nearby mobile body terminal 301.

When the communication unit 11 receives the position information and the attribute information of the nearby mobile body from the nearby mobile body terminal 301 in Step S202A, the communication unit 11 outputs the position information and the attribute information of the nearby mobile body to the notification determination unit 12. In Step S202B, the notification determination unit 12 that has acquired the position information and the attribute information of the nearby mobile body selects the sub-light vehicle caution map according to the attribute of the nearby mobile body from the storage 13.

After Step S202B, in Step S203, the notification determination unit 12 refers to the sub-light vehicle caution map selected in Step S202B, and determines whether or not the light vehicle and the nearby mobile body are to enter the caution area.

Note that, although notification to the nearby mobile body is performed in the processing example of FIG. 18, notification to the light vehicle may be performed. When notification is performed from the light vehicle terminal 201, the attribute of the nearby mobile body having a risk of collision may be notified together. In this case, the notification information transmitted from the communication unit 11 of the driving assistance apparatus 101 to the light vehicle terminal 201 includes the attribute information of the nearby mobile body. According to such a configuration, the driver of the light vehicle can recognize with which type of mobile body the driver has a risk of colliding, and can thus perform effective risk-reducing driving.

### <C-3. Effects>

In the driving assistance apparatus according to Embodiment 3, the first light vehicle caution map 14 includes the plurality of sub-light vehicle caution maps 141 to 145 each defining the caution area for each attribute of the nearby mobile body. The travel information includes the light vehicle information and the nearby mobile body information. The nearby mobile body information includes the information of the attribute of the nearby mobile body. The notification determination unit 12 determines whether or not at least one of the light vehicle and the nearby mobile body is to enter the caution area, based on the travel information and the sub-light vehicle caution map according to the attribute of the nearby mobile body. Thus, notifications to the nearby mobile body having an attribute of no collision are reduced, and notification accuracy is enhanced.

### <D. Embodiment 4>

### <D-1. Configuration>

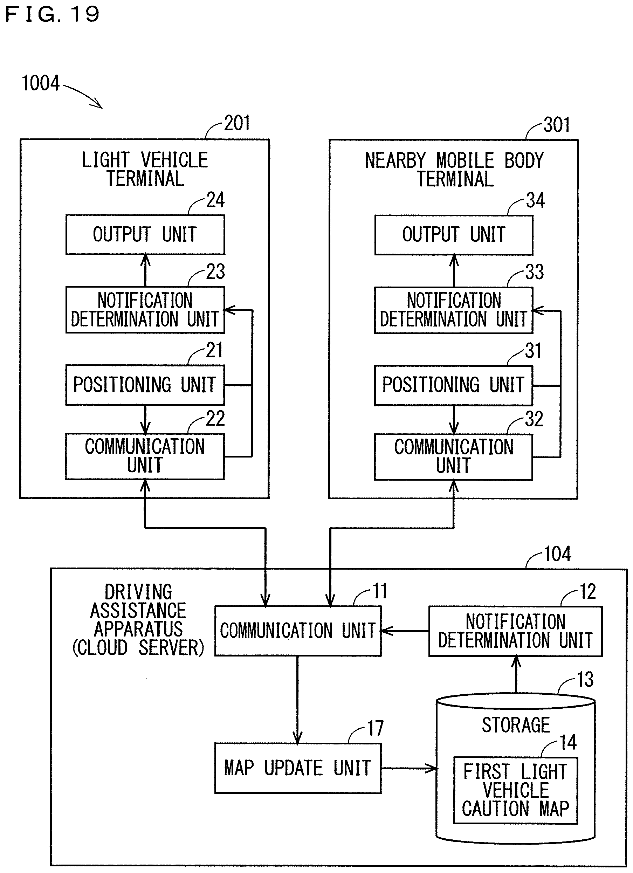

FIG. 19 illustrates a configuration of a driving assistance system 1004 according to Embodiment 4. The driving assistance system 1004 includes a driving assistance apparatus 104, in place of the driving assistance apparatus 101 of the driving assistance system 1001 according to Embodiment 1. The driving assistance apparatus 104 includes a map update unit 17, in addition to the configuration of the driving assistance apparatus 101.

The light vehicle terminal 201 detects a near miss, such as sudden deceleration, sudden stop, and sudden steering, that has occurred in the light vehicle. The light vehicle terminal 201 can detect a near miss that the light vehicle has encountered, using the acceleration sensor mounted on the light vehicle terminal 201 or the like. When the light vehicle terminal 201 detects a near miss in the light vehicle, the communication unit 22 transmits near miss information including time of occurrence of the near miss in the light vehicle and information of the position of the light vehicle at the time to the communication unit 11 of the driving assistance apparatus 104. Note that the near miss information transmitted from the light vehicle terminal 201 is also referred to as light vehicle near miss information.

Similarly, the nearby mobile body terminal 301 detects a near miss that has occurred in the nearby mobile body. When the nearby mobile body terminal 301 detects a near miss in the nearby mobile body, the communication unit 32 transmits near miss information including time of occurrence of the near miss in the nearby mobile body and information of the position of the nearby mobile body at the time to the communication unit 11 of the driving assistance apparatus 104. Note that the near miss information transmitted from the nearby mobile body terminal 301 is also referred to as nearby mobile body near miss information.

The map update unit 17 updates the first light vehicle caution map stored in the storage 13, based on the near miss information.

### <D-2. Operation>

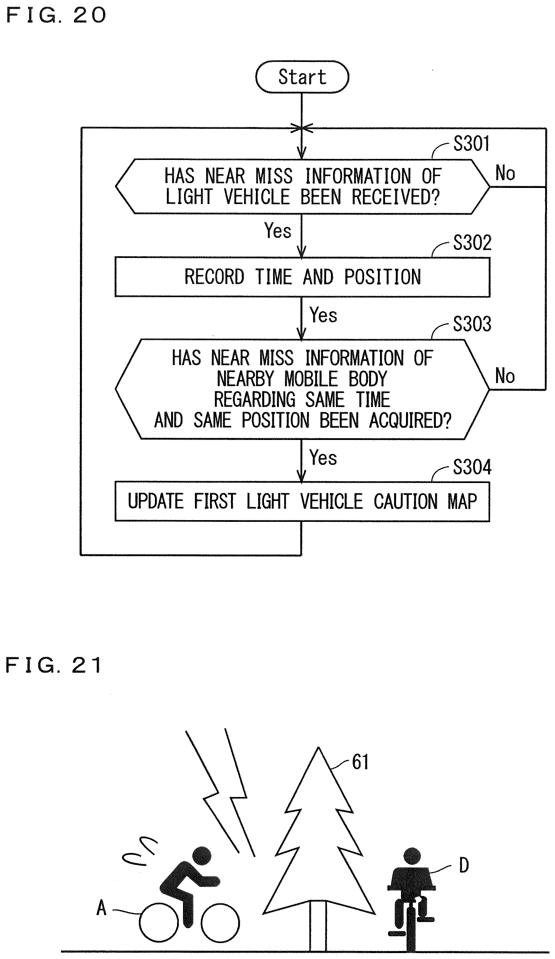

FIG. 20 is a flowchart illustrating map update processing of the map update unit 17. First, in Step S301, the map update unit 17 determines whether or not the map update unit 17 has received the near miss information of the light vehicle from the light vehicle terminal 201.

The map update unit 17 repeats the processing of Step S301 until receiving the near miss information of the light vehicle. In Step S301, when the map update unit 17 receives the near miss information of the light vehicle, in Step S302, the map update unit 17 records the time and the position included in the near miss information of the light vehicle.

Next, in Step S303, the map update unit 17 determines whether or not the map update unit 17 has acquired, from the nearby mobile body terminal 301, the near miss information regarding the same time and the same position as the near miss information recording the time and the position recorded in Step S302.

In Step S303, when the near miss information regarding the same time and the same position has not been acquired, the processing of the map update unit 17 returns to Step S301.

In Step S303, when the near miss information regarding the same time and the same position has been acquired, in Step S304, the map update unit 17 adds an area in which the near miss information is generated to the first light vehicle caution map 14 as a new caution area, and thereby updates the first light vehicle caution map 14. Then, the processing of the map update unit 17 returns to Step S301.

Note that, when the map update unit 17 acquires the near miss information of the nearby mobile body regarding the same time and the same position as the near miss information of the light vehicle in Step S303, the map update unit 17 may store the attribute of the nearby mobile body. Then, when the map update unit 17 adds the new caution area to the first light vehicle caution map 14 in Step S304, the map update unit 17 associates the attribute of the nearby mobile body stored in Step S303 with the new caution area. Consequently, the first light vehicle caution map 14 including the attribute information of the nearby mobile body can be created.

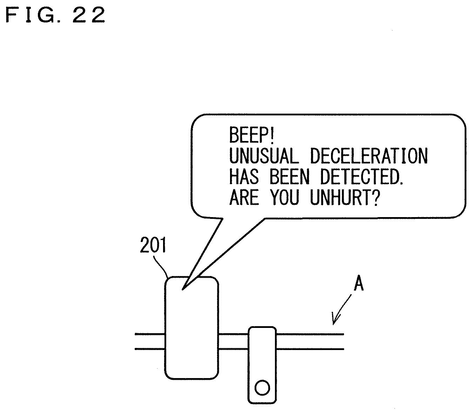

FIG. 21 illustrates a situation in which the light vehicle A almost collided with a nearby mobile body D and has thus suddenly decelerated at a location with poor views due to the field of view being obstructed by a tree 61. In such a case, as illustrated in FIG. 22, the light vehicle terminal 201 mounted on the light vehicle A makes a voice announcement, such as "unusual deceleration has been detected. Are you unhurt?". In response to this, the driver of the light vehicle A can input a request that the object needs to be mended because the views are obstructed by the tree 61 to the light vehicle terminal 201 through an operation or a voice input to the light vehicle terminal 201.

### <D-3. Effects>

In the driving assistance apparatus 104 according to Embodiment 4, the communication unit 11 receives the light vehicle near miss information including the time and the position of a near miss that has occurred in the light vehicle from the light vehicle terminal 201, and receives the nearby mobile body near miss information including the time and the position of a near miss that has occurred in the nearby mobile body from the nearby mobile body terminal 301. The driving assistance apparatus 104 includes the map update unit 17 configured to update the first light vehicle caution map 14, based on the light vehicle near miss information and the nearby mobile body near miss information. Thus, according to the driving assistance apparatus 104, the first light vehicle caution map 14 can be kept up to date all the time.

### <D-4. First Modification>

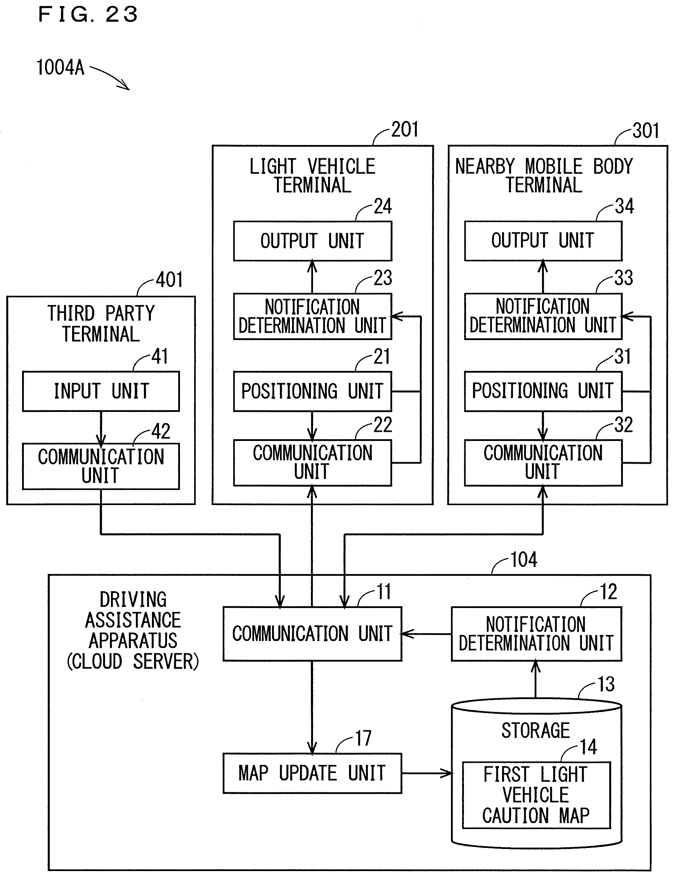

FIG. 23 illustrates a configuration of a driving assistance system 1004A according to a first modification of Embodiment 4. The driving assistance system 1004A includes a third party terminal 401, in addition to the configuration of the driving assistance system 1004 according to Embodiment 4.

The third party terminal 401 is an information terminal carried by a third party. Here, the third party is a local resident or other traffic user who has witnessed a near miss between the light vehicle and the nearby mobile body. In the driving assistance system 1004A, an input of the near miss information is received from the third party terminal 401, and the map update unit 17 updates the first light vehicle caution map 14 by using the near miss information.

The third party terminal 401 includes an input unit 41 and a communication unit 42. The input unit 41 is an input interface allowing the third party terminal 401 to input the near miss information, and is configured with a touch panel or a voice recognition unit, for example. The third party who has witnessed a near miss between the light vehicle and the nearby mobile body inputs the near miss information including information of the position and the time of occurrence of the near miss through the input unit 41.

The communication unit 42 transmits the near miss information input through the input unit 41 to the communication unit 11 of the driving assistance apparatus 104. Note that the near miss information transmitted from the third party terminal 401 is also referred to as third party near miss information.

In the driving assistance apparatus 104, the map update unit 17 adds a new caution area to the first light vehicle caution map 14 and thereby updates the first light vehicle caution map 14, based on the position information included in the near miss information received by the communication unit 11 from the third party terminal 401.

Note that the map update unit 17 compares the near miss information received from the third party terminal 401 and the near miss information received from the light vehicle terminal 201 or the nearby mobile body terminal 301, and when both match, the map update unit 17 may update the first light vehicle caution map 14, based on the near miss information received from the third party terminal 401.

When the near miss information received from the third party terminal 401 does not include the position information, the time information, or the attribute information of the nearby mobile body, the map update unit 17 need not use the near miss information for update of the first light vehicle caution map 14. In this case, the map update unit 17 may arrange that the driver of the light vehicle can refer to the near miss information as word-of-mouth information as appropriate.

### <E. Hardware Configuration>

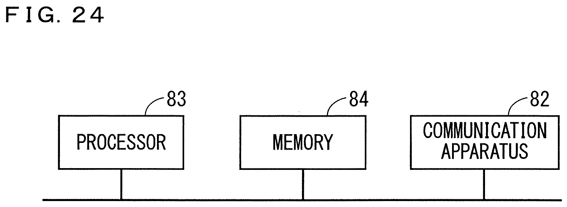

FIG. 24 illustrates a hardware configuration of each of the driving assistance apparatuses 101, 102, 102A, 103, and 104, the light vehicle terminal 201, and the nearby mobile body terminal 301.

In the driving assistance apparatuses 101, 102, 102A, 103, and 104 described above, the communication unit 11 is implemented by a communication apparatus 82, the storage 13 is implemented by a memory 84, and the notification determination unit 12 is implemented by a processor 83. When the processor 83 executes a program stored in the memory 84, the function of the notification determination unit 12 is executed. For example, the processor 83 is a central processing unit, a processing apparatus, an arithmetic unit, a microprocessor, a microcomputer, a digital signal processor (DSP), or the like.

In other words, the driving assistance apparatuses 101, 102, 102A, 103, and 104 each include the memory 84 for storing the program to ultimately execute the processings of the driving assistance apparatuses 101, 102, 102A, 103, and 104 when being executed by the processor 83. In other words, it can also be said that the program causes a computer to execute procedures or methods of the notification determination unit 12 and the like. Here, for example, the memory 84 may be a non-volatile or volatile semiconductor memory such as a random access memory (RAM), a read only memory (ROM), a flash memory, an erasable programmable read only memory (EPROM), and an electrically erasable programmable read only memory (EEPROM), a hard disk drive (HDD), a magnetic disk, a flexible disk, an optical disc, a compact disc, a MiniDisc, a digital versatile disk (DVD), and a drive apparatus therefor or the like, or any storage medium to be used in future.

The communication unit 22 of the light vehicle terminal 201 is implemented by the communication apparatus 82, and the positioning unit 21 and the notification determination unit 23 are implemented by the processor 83 executing the program stored in the memory 84.

Note that each embodiment can be freely combined, and each embodiment can be modified or omitted as appropriate. The above description is in all aspects illustrative. It is therefore understood that numerous unillustrated modifications can be devised.

### EXPLANATION OF REFERENCE SIGNS

11 Communication unit, 12 Notification determination unit, 13 Storage, 14 First light vehicle caution map, 16 Road surface attribute map, 17 Map update unit, 21 Positioning unit, 22 Communication unit, 23 Notification determination unit, 24 Output unit, 25 Storage, 26 Second light vehicle caution map, 31 Positioning unit, 32 Communication unit, 33 Notification determination unit, 34 Output unit, 41 Input unit, 42 Communication unit, 82 Communication apparatus, 83 Processor, 84 Memory, 101, 102, 102A, 103, 104 Driving assistance apparatus, 141 to 145 Sub-light vehicle caution map, 201, 201A Light vehicle terminal, 301 Nearby mobile body terminal, 401 Third party terminal, 1001, 1001A, 1002, 1002A, 1003, 1004, 1004A Driving assistance system, Q1, Q2 Caution area.

## Claims

1. A driving assistance apparatus comprising:
a storage configured to store a first light vehicle caution map defining a caution area in which there is a risk of collision between a light vehicle and a nearby mobile body moving in a nearby area of the light vehicle;
a communication unit configured to receive travel information including at least one of light vehicle information including position information of the light vehicle received from a light vehicle terminal being an information terminal mounted on the light vehicle and nearby mobile body information including position information of the nearby mobile body received from a nearby mobile body terminal being an information terminal mounted on the nearby mobile body; and
a notification determination unit configured to determine whether or not at least one of the light vehicle and the nearby mobile body is to enter the caution area, based on the travel information and the first light vehicle caution map, wherein
when at least one of the light vehicle and the nearby mobile body is to enter the caution area, the communication unit transmits notification information that there is the risk of collision between the light vehicle and the nearby mobile body to the information terminal of at least another one.

2. The driving assistance apparatus according to claim 1, wherein
the travel information includes the light vehicle information and the nearby mobile body information,
the notification determination unit determines whether or not the light vehicle and the nearby mobile body are to enter the caution area, based on the travel information and the first light vehicle caution map, and
when the light vehicle and the nearby mobile body are to enter the caution area, the communication unit transmits the notification information.

3. The driving assistance apparatus according to claim 2, wherein
when the light vehicle and the nearby mobile body are to enter the caution area, the communication unit transmits the notification information to the light vehicle terminal.

4. A light vehicle terminal that communicates with the driving assistance apparatus according to claim 1, the light vehicle terminal comprising:
a light vehicle positioning unit configured to measure a position of the light vehicle;
a light vehicle storage configured to store a second light vehicle caution map being identical to the first light vehicle caution map;
a light vehicle determination unit configured to determine whether or not the light vehicle is to enter the caution area, based on the position of the light vehicle and the second light vehicle caution map; and
a light vehicle communication unit configured to transmit the light vehicle information to the communication unit when the light vehicle is to enter the caution area.

5. The driving assistance apparatus according to claim 1, wherein
the notification determination unit determines a notification level for the light vehicle and the nearby mobile body,
the notification information transmitted to the light vehicle terminal includes the notification level for the light vehicle,
the notification information transmitted to the nearby mobile body terminal includes the notification level for the nearby mobile body,
the light vehicle terminal having received the notification information performs notification in a mode according to the notification level for the light vehicle, and
the nearby mobile body terminal having received the notification information performs notification in a mode according to the notification level for the nearby mobile body.

6. The driving assistance apparatus according to claim 5, wherein
the notification determination unit determines the notification level for the light vehicle, based on an entry direction of the light vehicle to the caution area, and determines the notification level for the nearby mobile body, based on an entry direction of the nearby mobile body to the caution area.

7. The driving assistance apparatus according to claim 6, wherein
the first light vehicle caution map defines a degree of caution according to the entry direction to the caution area, and
the notification determination unit determines the notification level for the light vehicle, based on the entry direction of the light vehicle to the caution area and the degree of caution defined in the first light vehicle caution map, and determines the notification level for the nearby mobile body, based on the entry direction of the nearby mobile body to the caution area and the degree of caution defined in the first light vehicle caution map.

8. The driving assistance apparatus according to claim 1, wherein
the first light vehicle caution map includes a plurality of sub-light vehicle caution maps each defining the caution area for each attribute of the nearby mobile body,
the travel information includes the light vehicle information and the nearby mobile body information,
the nearby mobile body information includes information of the attribute of the nearby mobile body, and
the notification determination unit determines whether or not at least one of the light vehicle and the nearby mobile body is to enter the caution area, based on the travel information and one of the plurality of sub-light vehicle caution maps according to the attribute of the nearby mobile body.

9. The driving assistance apparatus according to claim 8, wherein
the notification information transmitted to the light vehicle terminal includes information of the attribute of the nearby mobile body.

10. The driving assistance apparatus according to claim 5, wherein
the communication unit receives a light vehicle occupant state including at least one of driving skills, a psychological state, a physiological state, a gaze direction, and a driving state of a driver of the light vehicle from the light vehicle terminal, and
the notification determination unit changes the notification level for the light vehicle according to the light vehicle occupant state.

11. The driving assistance apparatus according to claim 5, wherein
the storage stores a road surface attribute map having attribute information of a road surface, and
the notification determination unit refers to the road surface attribute map, and sets the notification level for the light vehicle or the nearby mobile body according to the attribute information of the road surface on which the light vehicle travels.

12. The driving assistance apparatus according to claim 11, wherein
when the light vehicle moves from the road surface having first attribute information to the road surface having second attribute information, the notification determination unit sets the notification level for the light vehicle or the nearby mobile body according to a combination of the first attribute information and the second attribute information.

13. The driving assistance apparatus according to claim 5, wherein
when the light vehicle or the nearby mobile body to enter the caution area decelerates, the notification determination unit lowers the notification level for the light vehicle or the nearby mobile body.

14. The driving assistance apparatus according to claim 13, wherein
when a driver of the light vehicle to enter the caution area recognizes the nearby mobile body, the notification determination unit lowers the notification level for the light vehicle or the nearby mobile body.

15. The driving assistance apparatus according to claim 1, wherein
the communication unit receives light vehicle near miss information including time and a position of a near miss that has occurred in the light vehicle from the light vehicle terminal, and receives nearby mobile body near miss information including time and a position of a near miss that has occurred in the nearby mobile body from the nearby mobile body terminal, and
the driving assistance apparatus further comprises a map update unit configured to update the first light vehicle caution map, based on the light vehicle near miss information and the nearby mobile body near miss information.

16. The driving assistance apparatus according to claim 15, wherein
the nearby mobile body near miss information includes attribute information of the nearby mobile body, and
the map update unit adds the attribute information of the nearby mobile body included in the nearby mobile body near miss information including the time and the position matching the time and the position of the light vehicle near miss information to the first light vehicle caution map as the attribute information of the nearby mobile body having the risk of collision in the caution area.

17. The driving assistance apparatus according to claim 15, wherein
the communication unit receives third party near miss information being the light vehicle near miss information or the nearby mobile body near miss information input to an information terminal of a third party by the third party who has witnessed the near miss that has occurred between the light vehicle and the nearby mobile body from the information terminal of the third party, and
the map update unit updates the first light vehicle caution map, based on the third party near miss information.

18. The driving assistance apparatus according to claim 1, wherein
when there are a plurality of the nearby mobile bodies around the light vehicle to enter the caution area, the notification determination unit selects at least one of the plurality of the nearby mobile bodies, based on a motion vector of the light vehicle and a motion vector of each of the plurality of the nearby mobile bodies, and
the communication unit transmits the notification information to the at least one of the plurality of the nearby mobile bodies selected by the notification determination unit.

19. A driving assistance method comprising:
receiving travel information including at least one of light vehicle information including position information of a light vehicle received from a light vehicle terminal being an information terminal mounted on the light vehicle and nearby mobile body information including position information of a nearby mobile body received from a nearby mobile body terminal being an information terminal mounted on the nearby mobile body moving in a nearby area of the light vehicle;
determining whether or not at least one of the light vehicle and the nearby mobile body is to enter a caution area, based on the travel information and a first light vehicle caution map defining the caution area in which there is a risk of collision between the light vehicle and the nearby mobile body; and
when at least one of the light vehicle and the nearby mobile body is to enter the caution area, transmitting notification information that there is the risk of collision between the light vehicle and the nearby mobile body to the information terminal of at least another one.
